# EUROPEAN PATENT SPECIFICATION

(11) **EP 4 094 740 B1**
(45) Date of publication and mention of the grant of the patent: **28.01.2026**
(21) Application number: 20914924.4
(22) Date of filing: 06.03.2020
(51) Int. Cl.: A61G 7/015, A61G 7/002, A47C 20/04, A47C 21/00

(54) **SMART BED BODY STRUCTURE**
INTELLIGENTE BETT-KÖRPERSTRUKTUR
STRUCTURE DE CORPS DE LIT INTELLIGENT

(30) Priority: 20.01.2020 CN 202010067602
(43) Date of publication of application: 30.11.2022
(73) Proprietor: Keeson Technology Corporation Limited, Jiaxing, Zhejiang 314016 (CN)
(72) Inventor: SHAN, Huafeng, Jiaxing, Zhejiang 314016 (CN); SHEN, Guofeng, Jiaxing, Zhejiang 314016 (CN); CHEN, Xuegang, Jiaxing, Zhejiang 314016 (CN); WANG, Wei, Jiaxing, Zhejiang 314016 (CN); REN, Yuxiang, Jiaxing, Zhejiang 314016 (CN); CAO, Kyo, Jiaxing, Zhejiang 314016 (CN); CHENG, Xinggang, Jiaxing, Zhejiang 314016 (CN)
(74) Representative: Viering, Jentschura & Partner mbB Patent- und Rechtsanwälte
(86) International application number: PCT/CN2020/078141
(87) International publication number: WO 2021/147144

(56) References cited:
- EP-A1- 2 027 844
- CN-A- 1 559 371
- CN-A- 1 559 371
- CN-A- 106 798 616
- CN-A- 106 963 582
- CN-A- 107 374 860
- CN-A- 107 374 860
- CN-A- 109 846 639
- CN-U- 204 411 140
- CN-U- 209 187 284
- CN-U- 209 301 548
- CN-U- 209 301 548
- JP-A- 2004 129 675
- JP-A- 2004 129 675
- US-A- 5 592 153
- US-A1- 2003 230 702
- US-A1- 2006 056 616

## Description

### Field of the Invention

The present invention relates to the technical field of machinery, in particular to a smart bed body structure.

### Background of the Invention

The booming artificial intelligence technology, Internet of Things technology, sensing technology, speech recognition, face recognition technology and edge computing in recent years have laid a solid foundation for smart homes. Speech assistants have become the main means of smart home interaction, allowing users to directly use speech to control home equipment such as air conditioners, TVs, curtains, and lights at home, making the user's control of smart home equipment more convenient and natural. However, most of the speech control in the smart home industry is based on online speech recognition on cloud networks, which has the risk of privacy leakage, and online speech recognition requires a network to operate. The response speed is affected by the network speed, and the volume is relatively large. The system development cost is high, requiring back-end servers and cloud platform fees; the development cycle is long, and mobile APPs need to be developed. The application process requires a complex network distribution process. A smart bed body structure which is similar to the one of the present invention is described in US5592153A.

### Summary of the Invention

The present invention provides a smart bed body structure to solve the technical problems in the prior art, such as low response speed of speech control.

For this purpose, the invention provides a smart bed body structure as defined in claim 1. The smart bed body structure includes: a bed body, a control unit, a speech recognition unit and an audio device. The control unit is electrically connected with the speech recognition unit. The speech recognition unit is electrically connected with the audio device. The bed body includes: a load-bearing mechanism, at least one turnover mechanism and a base. The control unit and the audio device are arranged on the bottom face of the load-bearing mechanism. The load-bearing mechanism is arranged on the top face of the base, the turnover mechanisms being arranged between the load-bearing mechanism and the base, the load-bearing mechanism can be upwards turned over relative to the base by means of the turnover mechanisms. The control unit is electrically connected with the turnover mechanisms.

Further, the audio device includes: a fixed seat, a gooseneck, a fixing buckle and a sound pickup microphone. The fixed seat, the gooseneck and the sound pickup microphone are connected in sequence. The gooseneck is matched with the fixing buckle.

Further, the sound pickup microphone includes: a sound pickup transmitter, an indicator light, a transparent hose and a hollow shell. The sound pickup transmitter is arranged at one end of the shell, the other end of the shell being connected with the gooseneck, the indicator light being arranged in the shell. The middle of the shell is provided with an opening matched with the transparent hose, and the transparent hose is arranged in the opening. The indicator light is arranged in the shell and aligned with the transparent hose.

Further, the load-bearing mechanism includes: a first bed board, a second bed board and a third bed board. The first bed board, the second bed board and the third bed board are arrayed in sequence. The first bed board and the second bed board are in pivot connection at a junction.

Further, each of the turnover mechanisms includes: a driving motor, a supporting rod, a first sliding rod and a second sliding rod. The moving end of the driving motor is in pivot connection with the supporting rod, the fixed end of the driving motor being in pivot connection with the base, the operating direction of the driving motor being parallel to the direction from the first bed board to the third bed board. The supporting rod is fixedly connected with the base, the supporting rod being perpendicular to the direction from the first bed board to the third bed board. The moving end of the first sliding rod and the moving end of the second sliding rod are provided with pulleys, respectively, the fixed end of the first sliding rod and the fixed end of the second sliding rod being fixedly connected with the supporting rod, respectively. The horizontal direction from the fixed end of the first sliding rod and the fixed end of the second sliding rod to the respectively corresponding pulleys is parallel to the horizontal direction from the supporting rod to the fixed end of the driving motor.

Further, the turnover mechanisms are arranged between the first bed board and the base.

Further, the smart bed body structure further includes: at least one connecting rod. The two ends of the connecting rod are in pivot connection with the base and the tail of the third bed board, respectively. The turnover mechanisms are arranged between the third bed board and the base.

Further, the base includes: a front frame and a rear frame. The front frame and the rear frame are in pivot connection at a junction. The first bed board and the second bed board are arranged on the top face of the front frame, the third bed board being arranged on the top face of the rear frame.

Further, the smart bed body structure further includes: slide rails. The matched slide rails are arranged on the bottom face of the load-bearing mechanism corresponding to the pulleys.

Further, the smart bed body structure further includes: a stop rod. The stop rod is arranged at the tail of the third bed board.

By means of offline speech control, the leakage of user privacy is prevented, and the response speed is increased.

### Brief Description of the Drawings

By reading the detailed description of the non-restrictive embodiments with reference to the drawings below, other features, objectives and advantages of the invention will be more apparent:
Fig. 1 is a perspective view of a smart bed body structure of an embodiment of the invention;
Fig. 2 is a bottom view of the smart bed body structure of the embodiment of the invention;
Fig. 3 is a perspective view of an audio device in an embodiment of the invention;
Fig. 4 is a partially enlarged view of the audio device in the embodiment of the invention.

### Description of reference numerals:

1-bed body, 2-control unit, 3-speech recognition unit, 4-audio device, 11-load-bearing mechanism, 12-turnover mechanism, 13-base, 41-fixed seat, 42-gooseneck, 43-fixing buckle, 44-sound pickup microphone, 441-sound pickup transmitter, 442-indicator light, 443-transparent hose, 444-shell, 111-first bed board, 112-second bed board, 113-third bed board, 121-driving motor, 122-supporting rod, 123-first sliding rod, 124-second sliding rod, 5-pulley, 6-connecting rod, 7-tail, 8-head, 131-front frame, 132-rear frame, 9-slide rail, 10-stop rod.

### Detailed Description of the Embodiments

The present invention is further described in detail below with reference to the drawings.

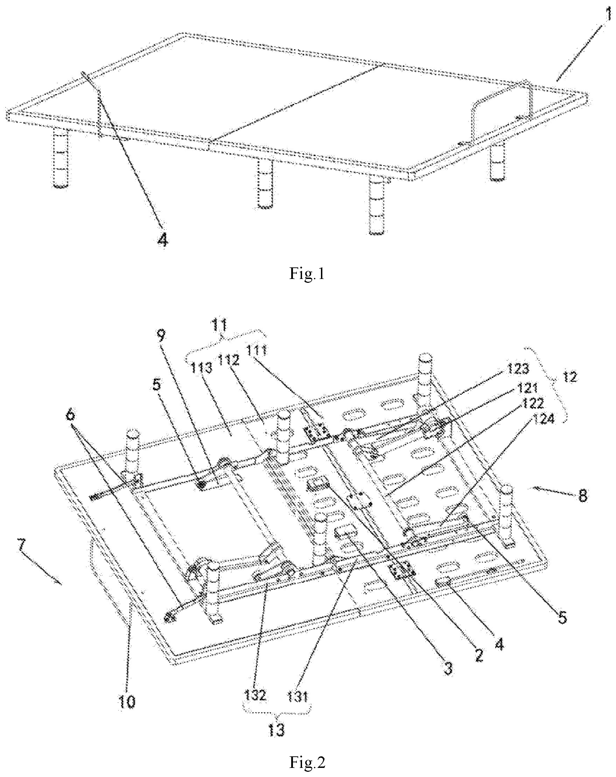

Fig. 1 is a perspective view of a smart bed body structure of an embodiment of the invention, and Fig. 2 is a bottom view of the smart bed body structure of the embodiment of the invention. As shown in Fig. 1 and Fig. 2, a smart bed body 1 structure provided by the invention includes: a bed body 1, a control unit 2, a speech recognition unit 3 and an audio device 4. The control unit 2 is electrically connected with the speech recognition unit 3. The speech recognition unit 3 is electrically connected with the audio device 4. The bed body 1 includes: a load-bearing mechanism 11, at least one turnover mechanism 12 and a base 13. The control unit 2 and the audio device 4 are arranged on the bottom face of the load-bearing mechanism 11. The load-bearing mechanism 11 is arranged on the top face of the base 13. The turnover mechanisms 12 are arranged between the load-bearing mechanism 11 and the base 13, the load-bearing mechanism 11 can be upwards turned over relative to the base 13 by means of the turnover mechanisms 12. The control unit 2 is electrically connected with the turnover mechanisms 12.

The audio device 4 acquires a speech signal and transmits it to the speech recognition unit 3. When recognizing a speech command that matches with a speech command library, the speech recognition unit 3 makes an LED light turn on, the light staying on for a preset time and then turning off, and transmits the recognized command to the control unit 2. The control unit 2 controls the corresponding executive elements, such as the turnover mechanisms, motors of various parts, massage motors, lights under the bed, etc., to make an action corresponding to the speech command. A remote control can also command the control unit 2 to control the corresponding executive elements, but it cannot be performed simultaneously with speech control, and the simultaneous operation of the two will interrupt the actions of each other. The control unit 2, the speech recognition unit 3 and the audio device 4 are all mounted on the bottom face of the bed body 1, are integrated with the bed body 1, do not occupy any home space, and will not appear obtrusive. Speech control is more convenient, and the sense of product grade is higher, which is conducive to attracting customers and increasing sales.

The speech recognition unit 3 adopts an adaptive algorithm, and continuously makes fine adjustments according to a deviation value of a user's speech eigenvalue within an allowable range and an eigenvalue model of a local speech packet to adapt to the user's change in sound rays. The speech recognition unit 3 also has a voiceprint recognition function, that is, it can recognize speech commands issued by different users, and can effectively prevent children from speech control of the electric bed to realize a child lock function. When this function is enabled, the user only needs to read the speech command aloud once, the speech recognition unit 3 recognizing and recording the voiceprint. After that, no second adjustment is required, and the design will adapt to the change.

Preferably, the bed body 1 is combined with offline speech control for local speech recognition without networking, that is, neither the control unit 2 nor the speech recognition unit 3 is connected to the Internet. The response speed is high (0.2 seconds), the size is small, and the cost is low. It can support word recognition of at least hundreds of speech commands, and there is no risk of privacy leakage. The wake-up word is a necessary condition for starting offline speech control, and speech control can only be performed when the wake-up word is recognized. After the speech recognition unit 3 recognizes the wake-up word, an offline speech control system starts, and transmits the corresponding command signal to the control unit 2 according to the valid command word, so that the control unit 2 drives the corresponding executive element. The bed body 1 is provided with the speech recognition unit 3 and the audio device 4. The audio device 4 has buttons to switch between different wake-up words, such as "ergo" and "motion". Different bed bodies 1 start the speech control system in correspondence to different wake-up words. In a set of speech recognition unit 3 and audio device 4, the offline speech in the speech recognition unit 3 contains different commands, such as "Ergo right raise head (controlling the left bedside to raise)", "Ergo left raise head (controlling the right bedside to raise)".

Preferably, the control unit 2 and the speech recognition unit 3 use a neural network processor, which is a hardware processor based on a deep neural network (DNN), so that the acquisition, calculation, and decision-making of speech data are performed locally without relying on the network, the time delay is small, and user privacy can be protected. It supports enhancement of noise reduction by means of a single or dual microphones, realizes 360-degree omni-directional sound pickup, and can suppress environmental noise outside the direction of the target speech, ensuring the accuracy of speech recognition in noisy environments. Autonomous learning by means of a speech model is supported. In the offline state, the user can customize the wake-up word and command word by means of speech entering, which realizes exclusive self-service customization, making it more in line with the usage habit of the user. Also, a special adaptive algorithm is adopted to extract the deviation value of the eigenvalue, update the eigenvalue model of the local speech packet, and adapt to the change in the user's speech eigenvalues that are caused by the growth of age and the change in sound rays.

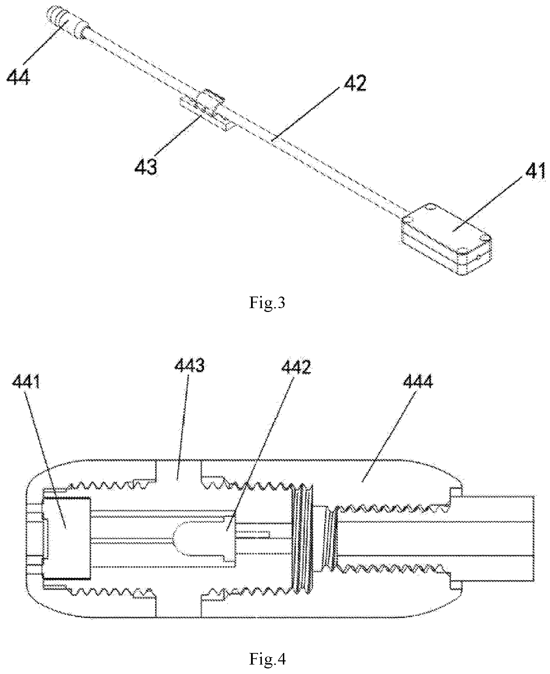

Further, Fig. 3 is a perspective view of an audio device in an embodiment of the invention. As shown in Fig. 3, the audio device 4 includes: a fixed seat 41, a gooseneck 42, a fixing buckle 43 and a sound pickup microphone 44. The fixed seat 41, the gooseneck 42 and the sound pickup microphone 44 are connected in sequence. The gooseneck 42 is matched with the fixing buckle 43.

The fixed seat 41 is fixed to the bottom face of the bed body 1, so that the audio device 4 is connected with the bed body 1. The audio device 4 adopts the gooseneck 42, which can be bent arbitrarily or with multiple joints, and can be fixed to the bottom face of the bed body 1 by means of the fixing buckle 43 when not in use, and pulled out when in use. The height and front and rear positions can be adjusted according to the height of the mattress, usage is convenient and the appearance is attractive, multi-microphone sound pickup is realized, the recognition rate is higher.

Further, Fig. 4 is a partially enlarged view of the audio device in the embodiment of the invention. As shown in Fig. 4, the sound pickup microphone 44 includes: a sound pickup transmitter 441, an indicator light 442, a transparent hose 443 and a hollow shell 444. The sound pickup transmitter 441 is arranged at one end of the shell 444, the other end of the shell 444 being connected with the gooseneck 42, the indicator light 442 is arranged in the shell 444. The middle of the shell 444 is provided with an opening matched with the transparent hose 443, the transparent hose 443 being arranged in the opening. The indicator light 442 is arranged in the shell 444 and aligned with the transparent hose 443.

The sound pickup transmitter 441 is arranged in a port at one end of the shell 444, which is conducive to sound acquisition. When the indicator light 442 works, light can be transmitted from the transparent hose 443 to remind the user to pay attention to the real-time state of the bed body 1 by presetting different colors correspond to different scenarios, which is fast and efficient.

Further, as shown in Fig. 2, the load-bearing mechanism 11 includes: a first bed board 111, a second bed board 112 and a third bed board113. The first bed board 111, the second bed board 112 and the third bed board 113 are arrayed in sequence. The first bed board 111 and the second bed board 112 are in pivot connection at a junction.

The multiple bed boards are connected to form the load-bearing mechanism 11 that can be turned over and deformed locally or as a whole. In this way, by matching the corresponding turnover mechanism 12, a certain or several bed boards can be turned over relative to the base 13, and the load-bearing mechanism 11 can be deformed. The shape of the load-bearing mechanism 11 can adjusted according to the needs of the user so as to meet different needs of sleeping postures, which is more in line with the curve of a human body, and brings the user a more comfortable experience.

Further, as shown in Fig. 2, each of the turnover mechanisms 12 includes: a driving motor 121, a supporting rod 122, a first sliding rod 123 and a second sliding rod 124. The moving end of the driving motor 121 is in pivot connection with the supporting rod 122, the fixed end of the driving motor 121 being in pivot connection with the base 13, the operating direction of the driving motor 121 being parallel to the direction from the first bed board 111 to the third bed board 113. The supporting rod 122 is fixedly connected with the base 13, the supporting rod 122 being perpendicular to the direction from the first bed board 111 to the third bed board 113. The moving end of the first sliding rod 123 and the moving end of the second sliding rod 124 are provided with pulleys 5, respectively, the fixed end of the first sliding rod 123 and the fixed end of the second sliding rod 124 being fixedly connected with the supporting rod 122, respectively. The horizontal direction from the fixed end of the first sliding rod 123 and the fixed end of the second sliding rod 124 to the respectively corresponding pulleys 5 is parallel to the horizontal direction from the supporting rod 122 to the fixed end of the driving motor 121.

When the driving motor 121 works, it pushes the supporting rod 122 to rotate, the supporting rod 122 driving the first sliding rod 123 and the second sliding rod 124 to rotate, the pulleys 5 making contact with the bottom face of a certain corresponding bed board and sliding to gradually push the bed board to be upwards turned over relative to the base 13. The lengths of the first sliding rod 123 and the second sliding rod 124 determine the upper limit of the turnover angle. The number of the turnover mechanisms 12 can be set as required. For example, a turnover mechanism 12 is arranged between the first bed board 111 and the base 13 to realize local deformation of the load-bearing mechanism 11. For another example, a turnover mechanism 12 is arranged under each of the first bed board 111 and the third bed board 113, and the two turnover mechanism 12 work cooperatively to push the first bed board 111 and the third bed board 113, so that the load-bearing mechanism 11 becomes an "S" shape. The turnover mechanisms 12 are simple and practical, and the cost is low. The use of the pulleys 5 makes the turnover process smoother, and the stuck sense is not prone to occurring in the deformation process.

Further, as shown in Fig. 2, the smart bed body structure further includes: at least one connecting rod 6. The two ends of the connecting rod 6 are in pivot connection with the base 13 and the tail 7 of the third bed board 113, respectively. The turnover mechanisms 12 are arranged between the third bed board 113 and the base 13.

By additionally arranging one or two connecting rods 6, the turnover direction and angle of the third bed board 113 can be limited. Under the action of the connecting rods 6, the third bed board 113 will be upwards raised as a whole, and the head 8 of the third bed board 113 will be upwards turned over, which is in line with joints of human legs and enhances the user's comfort.

Further, as shown in Fig. 2, the base 13 includes: a front frame 131 and a rear frame 132. The front frame 131 and the rear frame 132 are in pivot connection at a junction. The first bed board 111 and the second bed board 112 are arranged on the top face of the front frame 131, the third bed board 113 being arranged on the top face of the rear frame 132.

The base 13 is divided into two portions that are matched with the corresponding bed boards, which facilitates folding of the bed body 1, the bed body 1 can be assembled in the factory, and the user can use the bed body 1 only by unfolding it. The bed body 1 is packaged after being folded, which reduces its packaging volume, reduces the transportation cost, and enhances product competitiveness.

Furthermore, bed feet can also be additionally arranged as required. For example, six bed feet are additionally arranged, that is, the head and the tail are each provided with two bed feet, and the pivot joint of the front frame 131 and the rear frame 132 is also additionally provided with two bed feet to jack the middle and prevent collapse, which facilitates adjustment of the height of the bed body 1.

Further, as shown in Fig. 2, the smart bed body structure further includes: slide rails 9. The matched slide rails 9 are arranged on the bottom face of the load-bearing mechanism 11 corresponding to the pulleys 5.

The pulleys 5 slide on the bottom surface of the load-bearing mechanism 11 and, after long-term use, will wear the load-bearing mechanism 11, and even cause local deformation of the load-bearing mechanism 11. According to the number and positions of the pulleys 5, corresponding slide rails are arranged, and by additionally arranging the slide rails 9, the wear of the load-bearing mechanism 11 can be reduced, the deformation of the load-bearing mechanism 11 can be prevented, and the service life of the load-bearing mechanism 11 can be prolonged.

Further, as shown in Fig. 2, the smart bed body structure further includes: a stop rod 10. The stop rod 10 is arranged at the tail 7 of the third bed board 113.

In the turnover and deformation processes of the load-bearing mechanism 11, the mattress that is placed thereon can move, while by additionally arranging the stop rod 10, the mattress can be prevented from sliding off in the turnover and deformation processes of the load-bearing mechanism 11.

After considering the specification and practicing the invention disclosed herein, those skilled in the art will easily think of other implementations of the invention. The present application is intended to cover any variations, objectives or adaptive changes of the invention, and these variations, objectives or adaptive changes follow the general principles of the invention and include common general knowledge or conventional technical means in the technical field that are not disclosed in the present disclosure. The specification and embodiments are considered exemplary only, and the true scope of the invention are indicated by the following claims.

It should be appreciated that the present invention is not limited to the precise structure that having been described above and shown in the drawings and can make various modifications and changes without departing its scope.

## Claims

1. A smart bed body structure, **characterized in that** the smart bed body structure comprises: a bed
body (1), a control unit (2), a speech recognition unit (3) and an audio device (4); wherein the control unit is electrically connected with the speech recognition unit, the speech recognition unit is electrically connected with the audio device; the bed body comprises: a load-bearing mechanism (11), at least one turnover mechanism (12) and a base (13);
the control unit and the audio device are arranged on a bottom face of the load-bearing mechanism; the load-bearing mechanism is arranged on a top face of the base, the turnover mechanisms being arranged between the load-bearing mechanism and the base, the load-bearing mechanism can be upwards turned over relative to the base by means of the turnover mechanisms; the control unit is electrically connected with the turnover mechanisms;
**characterized in that** the audio device comprises: a fixed seat (41), a gooseneck (42), a fixing buckle (43) and a sound pickup microphone (44);
wherein the fixed seat, the gooseneck and the sound pickup microphone are connected in sequence; the gooseneck is matched with the fixing buckle; **characterized in that** the sound pickup microphone comprises: a sound pickup transmitter (441), an indicator light (442), a transparent hose (443) and a hollow shell; (444) wherein the sound pickup transmitter is arranged at one end of the shell, the other end of the shell being connected with the gooseneck, the indicator light being arranged in the shell; the middle of the shell is provided with an opening matched with the transparent hose, the transparent hose being arranged in the opening;
the indicator light is arranged in the shell and aligned with the transparent hose.

2. The smart bed body structure according to any one of claims 1, **characterized in that** the load-bearing mechanism comprises: a first bed board, a second bed board and a third bed board; wherein the first bed board, the second bed board and the third bed board are arrayed in sequence; the first bed board and the second bed board are in pivot connection at a junction.

3. The smart bed body structure according to claim 2, **characterized in that** each of the turnover mechanisms comprises: a driving motor, a supporting rod, a first sliding rod and a second sliding rod; wherein a moving end of the driving motor is in pivot connection with the supporting rod, a fixed end of the driving motor being in pivot connection with the base, an operating direction of the driving motor being parallel to a direction from the first bed board to the third bed board;
the supporting rod is fixedly connected with the base, the supporting rod being perpendicular to the direction from the first bed board to the third bed board; a moving end of the first sliding rod and a moving end of the second sliding rod are provided with pulleys, respectively, a fixed end of the first sliding rod and a fixed end of the second sliding rod being fixedly connected with the supporting rod, respectively; a horizontal direction from the fixed end of the first sliding rod and the fixed end of the second sliding rod to the respectively corresponding pulleys is parallel to a horizontal direction from the supporting rod to the fixed end of the driving motor.

4. The smart bed body structure according to claim 3, **characterized in that** the turnover mechanisms are arranged between the first bed board and the base.

5. The smart bed body structure according to claim 4, **characterized in that** the smart bed body structure further comprises: at least one connecting rod; wherein two ends of the connecting rod are in pivot connection with the base and a tail of the third bed board, respectively;
the turnover mechanisms are arranged between the third bed board and the base.

6. The smart bed body structure according to claim 5, **characterized in that** the base comprises: a front frame and a rear frame; wherein the front frame and the rear frame are in pivot connection at a junction; the first bed board and the second bed board are arranged on a top face of the front frame, the third bed board being arranged on a top face of the rear frame.

7. The smart bed body structure according to claim 6, **characterized in that** the smart bed body structure further comprises: slide rails, the matched slide rails being arranged on a bottom face of the load-bearing mechanism corresponding to the pulleys.

8. The smart bed body structure according to claim 7, **characterized in that** the smart bed body structure further comprises: a stop rod, the stop rod being arranged on the tail of the third bed board.

## Patentansprüche

1. Eine intelligente Bettkörperstruktur, **dadurch gekennzeichnet, dass** die intelligente Bettkörperstruktur umfasst: einen Bettkörper (1), eine Steuereinheit (2), eine Spracherkennungseinheit (3) und eine Audioeinrichtung (4); wobei die Steuereinheit elektrisch mit der Spracherkennungseinheit verbunden ist, die Spracherkennungseinheit elektrisch mit der Audioeinrichtung verbunden ist; der Bettkörper umfasst: einen Lastaufnahmemechanismus (11), mindestens einen Umdrehmechanismus (12) und eine Basis (13); wobei die Steuereinheit und die Audioeinrichtung an einer Unterseite des Lastaufnahmemechanismus angeordnet sind; der Lastaufnahmemechanismus an einer Oberseite der Basis angeordnet ist, wobei die Umdrehmechanismen zwischen dem Lastaufnahmemechanismus und der Basis angeordnet sind, der Lastaufnahmemechanismus mittels der Umdrehmechanismen relativ zur Basis nach oben umgedreht werden kann; die Steuereinheit elektrisch mit den Umdrehmechanismen verbunden ist; **dadurch gekennzeichnet, dass** die Audioeinrichtung umfasst: einen festen Sitz (41), einen Schwanenhals (42), eine Befestigungsschnalle (43) und ein Schallaufnahmemikrofon (44); wobei der feste Sitz, der Schwanenhals und das Schallaufnahmemikrofon in Reihe verbunden sind; der Schwanenhals an die Befestigungsschnalle angepasst ist; **dadurch gekennzeichnet, dass** das Schallaufnahmemikrofon umfasst: einen Schallaufnahme sender (441), eine Anzeige leuchte (442), einen transparenten Schlauch (443) und ein hohles Gehäuse (444); wobei der Schallaufnahmesender an einem Ende des Gehäuses angeordnet ist, das andere Ende des Gehäuses mit dem Schwanenhals verbunden ist, die Anzeigeleuchte in dem Gehäuse angeordnet ist; die Mitte des Gehäuses mit einer Öffnung versehen ist, die an den transparenten Schlauch angepasst ist, wobei der transparente Schlauch in der Öffnung angeordnet ist; die Anzeigeleuchte in dem Gehäuse angeordnet ist und mit dem transparenten Schlauch ausgerichtet ist.

2. Die intelligente Bettkörperstruktur nach Anspruch 1, **dadurch gekennzeichnet, dass** der Lastaufnahmemechanismus umfasst: eine erste Bettplatte, eine zweite Bettplatte und eine dritte Bettplatte; wobei die erste Bettplatte, die zweite Bettplatte und die dritte Bettplatte in Reihe angeordnet sind; die erste Bettplatte und die zweite Bettplatte an einer Verbindungsstelle in Schwenkverbindung stehen.

3. Die intelligente Bettkörperstruktur nach Anspruch 2, **dadurch gekennzeichnet, dass** jeder der Umdrehmechanismen umfasst: einen Antriebsmotor, eine Stützstange, eine erste Gleitstange und eine zweite Gleitstange; wobei ein bewegliches Ende des Antriebsmotors mit der Stützstange in Schwenkverbindung steht, ein festes Ende des Antriebsmotors mit der Basis in Schwenkverbindung steht, eine Betriebsrichtung des Antriebsmotors parallel zu einer Richtung von der ersten Bettplatte zu der dritten Bettplatte ist; die Stützstange fest mit der Basis verbunden ist, wobei die Stützstange senkrecht zu die Richtung von der ersten Bettplatte zu der dritten Bettplatte ist; ein bewegliches Ende der ersten Gleitstange und ein bewegliches Ende der zweiten Gleitstange jeweils mit Riemenscheiben versehen sind, ein festes Ende der ersten Gleitstange und ein festes Ende der zweiten Gleitstange jeweils fest mit der Stützstange verbunden sind; eine horizontale Richtung von dem festen Ende der ersten Gleitstange und dem festen Ende der zweiten Gleitstange zu den jeweils entsprechenden Riemenscheiben parallel zu einer horizontalen Richtung von der Stützstange zu dem festen Ende des Antriebsmotors ist.

4. Die intelligente Bettkörperstruktur nach Anspruch 3, **dadurch gekennzeichnet, dass** die Umdrehmechanismen zwischen der ersten Bettplatte und der Basis angeordnet sind.

5. Die intelligente Bettkörperstruktur nach Anspruch 4, **dadurch gekennzeichnet, dass** die intelligente Bettkörperstruktur ferner umfasst: mindestens eine Verbindungsstange; wobei zwei Enden der Verbindungsstange mit der Basis bzw. einem Ende der dritten Bettplatte in Schwenkverbindung stehen; die Umdrehmechanismen zwischen der dritten Bettplatte und der Basis angeordnet sind.

6. Die intelligente Bettkörperstruktur nach Anspruch 5, **dadurch gekennzeichnet, dass** die Basis umfasst: einen vorderen Rahmen und einen hinteren Rahmen; wobei der vordere Rahmen und der hintere Rahmen an einer Verbindungsstelle in Schwenkverbindung stehen; die erste Bettplatte und die zweite Bettplatte an einer Oberseite des vorderen Rahmens angeordnet sind, wobei die dritte Bettplatte an einer Oberseite des hinteren Rahmens angeordnet ist.

7. Die intelligente Bettkörperstruktur nach Anspruch 6, **dadurch gekennzeichnet, dass** die intelligente Bettkörperstruktur ferner umfasst: Gleitschienen, wobei die angepassten Gleitschienen an einer Unterseite des Lastaufnahmemechanismus entsprechend den Riemenscheiben angeordnet sind.

8. Die intelligente Bettkörperstruktur nach Anspruch 7, **dadurch gekennzeichnet, dass** die intelligente Bettkörperstruktur ferner umfasst: eine Anschlagstange, wobei die Anschlagstange an dem Ende der dritten Bettplatte angeordnet ist.

## Revendications

1. Une structure corporelle de lit intelligent, **caractérisée en ce que** la structure corporelle du lit intelligent comprend : un corporelle de lit (1), une unité de contrôle (2), une unité de reconnaissance vocale (3) et un dispositif audio (4) ; dans laquelle l'unité de contrôle est connectée électriquement à l'unité de reconnaissance vocale, l'unité de reconnaissance vocale est connectée électriquement au dispositif audio ; le corporelle de lit comprend : un mécanisme porteur (11), au moins un mécanisme de basculement (12) et une base (13) ; l'unité de contrôle et le dispositif audio sont disposés sur une face inférieure du mécanisme porteur ; le mécanisme porteur est disposé sur une face supérieure de la base, les mécanismes de basculement étant disposés entre le mécanisme porteur et la base, le mécanisme porteur peut être basculé vers le haut par rapport à la base au moyen des mécanismes de basculement ; l'unité de contrôle est électriquement connectée aux mécanismes de basculement ; **caractérisé en ce que** le dispositif audio comprend : un siège fixe (41), un col de cygne (42), une boucle de fixation (43) et un microphone de prise de son (44) ; dans lequel le siège fixe, le col de cygne et le microphone de prise de son sont connectés successivement ; le col de cygne est assorti à la boucle de fixation ; **caractérisé en ce que** le microphone de prise de son comprend : un transmetteur de prise de son (441), un voyant lumineux (442), un tuyau transparent (443) et une coque creuse (444) dans lequel le transmetteur de prise de son est disposé à une extrémité de la coque, l'autre extrémité de la coque étant connectée au col de cygne, le voyant lumineux étant disposé dans la coque ; le milieu de la coque est pourvu d'une ouverture adaptée au tuyau transparent, le tuyau transparent étant disposé dans l'ouverture ; le voyant lumineux est disposé dans la coque et aligné avec le tuyau transparent.

2. La structure corporelle de lit intelligent selon l'une quelconque de réclamation 1, **caractérisée en ce que** le mécanisme porteur comprend : une première planche de lit, une deuxième planche de lit et une troisième planche de lit ; les première, deuxième et troisième planches de lit étant disposées successivement ; la première planche de lit et la deuxième planche de lit étant reliées par un pivot au niveau d'une jonction.

3. La structure corporelle de lit intelligent selon la réclamation 2, **caractérisée en ce que** chacun des mécanismes de basculement comprend : un moteur d'entraînement, une tige de support, une première tige coulissante et une deuxième tige coulissante ; dans laquelle une extrémité mobile du moteur d'entraînement est en connexion pivot avec la tige de support, une extrémité fixe du moteur d'entraînement étant en connexion pivot avec la base, une direction de fonctionnement du moteur d'entraînement étant parallèle à une direction allant du premier planche de lit au troisième planche de lit; la tige de support est reliée de manière fixe à la base, la tige de support étant perpendiculaire à la direction allant de la première planche de lit à la troisième planche de lit ; une extrémité mobile de la première tige coulissante et une extrémité mobile de la deuxième tige coulissante sont respectivement pourvues de poulies, une extrémité fixe de la première tige coulissante et une extrémité fixe de la deuxième tige coulissante étant respectivement reliées de manière fixe à la tige de support ; une direction horizontale allant de l'extrémité fixe de la première tige coulissante et de l'extrémité fixe de la deuxième tige coulissante aux poulies respectivement correspondantes est parallèle à une direction horizontale allant de la tige de support à l'extrémité fixe du moteur d'entraînement.

4. La structure corporelle de lit intelligent selon l'une quelconque de réclamation 3, **caractérisée en ce que** les mécanismes de retournement sont disposés entre le premier sommier et la base.

5. La structure corporelle de lit intelligent selon l'une quelconque de réclamation 4, **caractérisée en ce que** la structure de lit intelligent comprend en outre : au moins une tige de connexion ; dans laquelle les deux extrémités de la tige de connexion sont reliées de manière pivotante à la base et à une extrémité arrière du troisième panneau de lit, respectivement ; les mécanismes de retournement sont disposés entre le troisième panneau de lit et la base.

6. La structure corporelle de lit intelligent selon l'une quelconque de réclamation 5, **caractérisée en ce que** la base comprend : un cadre avant et un cadre arrière ; dans laquelle le cadre avant et le cadre arrière sont reliés de manière pivotante au niveau d'une jonction ; le premier sommier et le deuxième sommier sont disposés sur une face supérieure du cadre avant, le troisième sommier étant disposé sur une face supérieure du cadre arrière.

7. La structure corporelle de lit intelligent selon l'une quelconque de réclamation 6, **caractérisée en ce que** la structure de lit intelligent comprend en outre : des rails coulissants, les rails coulissants appariés étant disposés sur une face inférieure du mécanisme de support de charge correspondant aux poulies.

8. La structure corporelle de lit intelligent selon l'une quelconque de réclamation 7, **caractérisée en ce que** la structure de lit intelligent comprend en outre : une tige d'arrêt, la tige d'arrêt étant disposée sur l'arrière du troisième sommier.
